# EUROPÄISCHE PATENTSCHRIFT

(11) **EP 2 206 311 B1**
(45) Veröffentlichungstag und Bekanntmachung des Hinweises auf die Patenterteilung: **23.11.2016**
(21) Anmeldenummer: 08784379.3
(22) Anmeldetag: 23.07.2008
(51) Int. Cl.: H04N 21/24, H04N 21/262, H04N 21/61, H04N 21/643, H04N 21/647, H04L 29/06

(54) **VERFAHREN UND SYSTEM ZUR BANDBREITE-OPTIMIERTEN ÜBERTRAGUNG VON HDTV-DATENSTRÖMEN ÜBER EIN IP-BASIERTES VERTEILERNETZ**
METHOD AND SYSTEM FOR THE BANDWIDTH-OPTIMIZED TRANSMISSION OF HDTV DATA STREAMS VIA AN IP-BASED DISTRIBUTOR NETWORK
PROCÉDÉ ET SYSTÈME DE TRANSMISSION À BANDE PASSANTE OPTIMISÉE DE FLUX DE DONNÉES TVHD PAR UN RÉSEAU DE DISTRIBUTION À BASE IP

(30) Priorität: 23.10.2007 DE 102007050942
(43) Veröffentlichungstag der Anmeldung: 14.07.2010
(73) Patentinhaber: Deutsche Telekom AG, 53113 Bonn (DE)
(72) Erfinder: STUMPF, Alexander, 60489 Frankfurt/M. (DE); DASSOW, Heiko, 64347 Griesheim (DE); ORTH, Torsten, 63768 Hösbach (DE)
(74) Vertreter: Blumbach Zinngrebe
(86) Internationale Anmeldenummer: PCT/DE2008/001199
(87) Internationale Veröffentlichungsnummer: WO 2009/052772

(56) Entgegenhaltungen:
- WO-A-2004/057874
- US-B1- 6 510 177
- RADHA H ET AL: "Scalable Internet video using MPEG-4", SIGNAL PROCESSING. IMAGE COMMUNICATION, ELSEVIER SCIENCE PUBLISHERS, AMSTERDAM, NL, vol. 15, no. 1-2, 1 September 1999 (1999-09-01), pages 95-126, XP004180640, ISSN: 0923-5965, DOI: 10.1016/S0923-5965(99)00026-0

## Beschreibung

Die Erfindung betrifft im Allgemeinen eine Video- oder Multimedia-Netzwerkumgebung zum Verteilen von Programmen an eine Vielzahl von Teilnehmern und insbesondere ein Verfahren sowie ein Datenübertragungssystem zur Bandbreite-optimierten Übertragung von HDTV-Datenströmen über ein IP-basiertes Verteilernetz.

Verfahren und Systeme zur Übertragung von gruppenindividuellen Medienströmen, auch Media-Streams genannt, über ein Verteilernetzwerk sind hinlänglich bekannt. Bei diesen bekannten Verfahren werden verschiedene Medienströme an einem Punkt oder mehreren vorbestimmten Punkten in das Verteilernetz eingespeist und am anderen Ende des Verteilernetzes über sogenannte Multicast-Replikationspunkte gezielt einem einzelnen Teilnehmer oder Gruppen von Teilnehmern zugeführt.

Bei der Übertragung von HDTV-Programmen, das sind hochauflösende Fernsehprogramme, benötigt ein Teilnehmer einen Breitbandanschluss mit einer Mindestbandbreite, die zur Zeit zwischen 1Mbit/s bis 16 Mbit/s liegt. Zum gegenwärtigen Zeitpunkt gibt es zwei Varianten eines ADSL (Asymmetric Digital Subscriber Line)-Anschlusses, einen mit einer Bandbreite von 2 Mbit/s und einen mit einer Bandbreite von 6 Mbit/s. Darüber hinaus gibt es auch sogenannte VDSL (Very High Data Rate Digital Subscriber Line) - Anschlüsse mit einer Bandbreite von 50 Mbit/s. Verfügt ein Endteilnehmer lediglich über einen ADSL-Anschluss mit einer Bandbreite von 6Mbit/s, so können über diesen Anschluss in der Regel keine HDTV-Programme, sondern lediglich SDTV (Standard Digital Television)-Programme empfangen werden. SDTV-Programme werden im Unterschied zu HDTV-Programmen durch schmalbandigere Datenströme übertragen. Dies führt dazu, dass Sendeanstalten neben HDTV-Datenströmen auch Videodatenströme niedrigerer Bandbreite übertragen, die den Endteilnehmer in Abhängigkeit der zur Verfügung stehenden Breitbandanschlüsse zugeführt werden. Hierbei ist ein Nachteil darin zu sehen, dass bei der Übertragung von HDTV-Datenströmen und SD-Datenströmen eine hohe Bandbreite im Verteilernetz belegt wird.

Das US Patent 6510177 offenbart ein System und ein Verfahren zur Kodierung, Übertragung, Speicherung und Decodierung hochauflösender Videosequenzen mit einer Basisschicht niedriger Auflösung und einer Zusatzschicht höherer Auflösung. Die Basisschicht enthält Videos mit niedriger Auflösungsinformation und ist in einer Weise kodiert, so dass sie unabhängig von der Zusatzschicht dekodiert werden kann. Die Basisschicht kann in einem bestehenden Standard-Video-Format (wie z.B. MPEG-2) kodiert sein. Die Erweiterungsschicht, die hochauflösende Informationen enthält, sieht eine variable Menge von Zusatzinformationen zu der Basisschicht vor. Die komprimierte Videosequenz wird in zwei Schichten übertragen und verwendet ein Minimum an Bitrate mit Hilfe der Informationen in der Basisschicht bei der Entschlüsselung von sowohl der Basisschicht als auch der Zusatzschicht.

WO 2004/057874 beschreibt ein System zur Bereitstellung von HDTV Diensten.

Radha et al "Scalable Internet Video using MPEG-4", Signal procesing: image communication 15 (1999), Elsevier Science publishers, Amsterdam, beschreibt ein Verfahren zur dynamischen Anpassung der Bildqualität an die verfügbare Bandbreite.

Der Erfindung liegt daher die Aufgabe zugrunde, ein Verfahren und ein Datenübertragungssystem bereitzustellen, mit welchen Bandbreite eingespart werden kann, auch wenn ein und dasselbe Programme in unterschiedlicher Bildqualität über ein Verteilernetz übertragen wird,

Ein Kerngedanke der Erfindung ist darin zusehen, dass eine Sendeanstalt einen HDTV-Datenstrom erzeugt, der in einen schmalbandigeren Haupt-Videodatenstrom kodiert wird, der bei der Wiedergabe zu einer niedrigeren Bildqualität führt als bei der Wiedergabe des HDTV-Datenstroms. Der schmalbandige Haupt-Datenstrom kann ein SDTV-Datenstrom sein. Darüber hinaus wird der HDTV-Datenstrom in einen sogenannten Differenz- oder Aufwerte-Videodatenstrom dekodiert, der ohne Kombination mit dem SD-Videodatenstrom nicht darstellbar ist. Der Differenz-Videodatenstrom ist in der Regel ein breitbandiger Datenstrom, der durch Kombination mit dem schmalbandigeren SD-Videodatenstrom den HDTV-Datenstrom bildet. Dadurch, dass der Differenz-Videodatenstrom nur dann zusammen mit dem Haupt-Videodateristrom zu einem Endteilnehmer übertragen wird, wenn der Breitbandanschluss des jeweiligen Teilnehmers zum Empfangen eines HDTV-Datenstroms ausgelegt ist, kann die Bandbreite des verwendeten Verteilernetzes und des teilnehmerseitigen Breitbandanschlusses optimal ausgenutzt werden.

Das oben genannte technische Problem wird durch ein Verfahren zur Bandbreite-optimierten Übertragung eines HDTV-Datenstroms gelöst. Der HDTV-Datenstrom wird über ein IP-basiertes Verteilernetz zu wenigstens einem Endteilnehmer übertragen, der über einen Zugangsanschluss vorbestimmter maximaler Bandbreite mit dem IP-basierten Verteilernetz verbunden ist. Zunächst wird von einer Sendeanstalt ein HDTV-Datenstrom bereitgestellt, welcher ein HDTV-Programm darstellt. Der HDTV-Datenstrom wird in einen Haupt-Videodatenstrom, welcher eine niedrigere Bandbreite als der HDTV-Datenstrom besitzt, kodiert.

Weiterhin wird der HDTV-Datenstrom in wenigstens einen Differenz-Videodatenstrom kodiert. Sowohl der Haupt- als auch der Differenz-Videodatenstrom werden in das IP-basierte Verteilernetz eingespeist. In Abhängigkeit der verfügbaren Bandbreite des Zugangsanschiusses des wenigstens einen Endteilnehmers wird entweder nur der Haupt-Videodatenstrom oder sowohl der Haupt-Videodatenstrom als auch der wenigstens eine Differenz-Videodatenstrom zu dem wenigstens einen Endteilnehmer übertragen. Teilnehmerseitig wird, sofern nur der Haupt-Videodatenstrom übertragen worden ist, der Haupt-Videodatenstrom dekodiert und beispielsweise über einen Monitor wiedergegeben, wobei in diesem Fall das darzustellende HDTV-Programm in niedrigerer Bildqualität dargestellt wird. Wird hingegen sowohl der Haupt-Videodatenstrom als auch der Differenz-Videodatenstrom zum Endteilnehmer übertragen, so werden beide Videodatenströme dekodiert und in einer aufgewerteten Bildqualität wiedergegeben. Aufgewertete Bildqualität bedeutet, dass das sendeseitig bereitgestellte HDTV-Programm in einer Bildqualität wiedergegeben wird, die höher ist als die Bildqualität, die lediglich bei Wiedergabe des Haupt-Videodatenstroms erreicht wird.

Angemerkt sei an dieser Stelle, dass unter dem Begriff "Haupt-Videodatenstrom" ein Videodatenstrom zu verstehen ist, der alleine dargestellt werden kann, wobei die Bildqualität dann niedriger ist als die bei der Wiedergabe eines HDTV-Datenstrom. Unter Differenz-Videodatenstrom ist ein Videodatenstrom zu verstehen, der nicht alleine darstellbar ist, sondern nur in Kombination mit dem Haupt-Videodatenstrom darstellbar ist.

Angemerkt sei an dieser Stelle, dass als IP-basiertes Verteilernetz jegliches Verteilernetz mit erfasst ist, welches eine paketorientierte Datenübertragung unterstützt. Bei einer bevorzugten Ausführung ist das IP-basierte Verteilernetz das Internet.

Der Differenz-Videodatenstrom wird erzeugt, indem zunächst der Haupt-Videodatenstrom dekodiert wird. Um ein Differenzsignal aus dem dekodierten Haupt-Videodatenstrom und dem HDTV-Datenstrom gewinnen zu können, muss der HDTV-Datenstrom derart verzögert werden, dass in beiden Datenströmen der gleiche Bildinhalt zum gleichen Zeitpunkt vorliegt. Angemerkt sei an dieser Stelle, dass der dekodierte Haupt-Videodatenstrom und der HDTV-Datenstrom Videosignalen entsprechen, die über einen Monitor oder ein Fernsehempfangsgerät wiedergegeben werden können. Das Differenzsignal wird dann in den Differenz-Videodatenstrom kodiert. Vorzugsweise wird bei der Erzeugung des Differenz-Videosignals eine HDTV-Delta-Kodierung durchgeführt. Die HDTV-Delta-Kodierung ist beispielsweise aus dem US-Patent mit der Nummer 20040017852 bekannt.

Um die verfügbare Bandbreite des Datenübetragungssystems, insbesondere der digitalen breitbandigen Teilnehmeranschlussleitungen, optimal ausnutzen zu können, wird der Differenz-Videodatenstrom zwischengespeichert. Bei einer bevorzugten Ausführungsform wird der Differenz-Videodatenstrom im IP-basierten Verteilernetz zwischengespeichert. Der zwischengespeicherte Differenz-Videodatenstrom wird nur dann zum Endteilnehmer übertragen, wenn dessen Zugangsanschluss über eine ausreichend hohe Bandbreite zum Empfang des Haupt- und Differenz-Videodatenstroms verfügt.

In diesem Fall werden die teilnehmerseitig dekodierten Haupt-und Differenz-Videodatenströme kombiniert, so dass gemäß einer bevorzugten Ausführungsform der von der Sendeanstalt erzeugte HDTV-Datenstrom beim Teilnehmer wiedergewonnen wird.

Bereits an dieser Stelle sei darauf hingewiesen, dass mehrere Differenz-Videodatenströme erzeugt werden können, die bei einer entsprechenden Kombination mit dem Haupt-Videodatenstrom zu einer aufgewerteten Bildqualität führen, die höher ist als die Bildqualität, die durch den Haupt-Videodatenstrom erzeugt wird.

Eine dynamische Optimierung der Nutzung der Übertragungsbandbreite wird dadurch erreicht, dass die aktuell verfügbare Bandbreite des Zugangsanschlusses des wenigstens einen Endteilnehmers auch während der Wiedergabe des HDTV-Programms ermittelt wird. In Abhängigkeit von der ermittelten Bandbreite wird dann die Übertragung des Differenz-Videodatenstroms zum Teilnehmer hin gesteuert. Dies bedeutet, dass die Übertragung des Differenz-Videodatenstrom zum Endteilnehmer beispielsweise vorübergehend unterbrochen, beendet, wieder aufgenommen oder überhaupt gestartet wird.

Das oben genannte technische Problem wird ebenfalls durch ein Datenübertragungssystem zur Bandbreite-optimierten Übertragung eines HDTV-Datenstroms gelöst. Hierzu weist das Datenübertragungssystem ein IP-basiertes Verteilernetz und wenigstens eine Sendeanstalt auf. Die Sendeanstalt enthält eine Einrichtung zum Bereitstellen eines HDTV-Datenstroms, welches ein HDTV-Programm darstellt. Ferner ist der Sendeanstalt ein erster Kodierer zum Kodieren des HDTV-Datenstroms in einen Haupt-Videodatenstrom niedrigerer Bandbreite, ein Dekodierer zum Dekodieren des Haupt-Videodatenstroms in einen darstellbaren Videodatenstrom, eine Einrichtung zum Erzeugen eines Differenzsignals aus dem HDTV-Datenstrom und dem dekodierten Haupt-Videodatenstrom sowie ein zweiter Kodierer zum Kodieren des Differenzsignals in einen Differenz-Videodatenstrom zugeordnet. Ferner weist das Datenübertragungssystem eine Einrichtung zum Einspeisen des Haupt-und Differenz-Videodatenstroms in das IP-basierte Verteilernetz auf.

Weiterhin ist wenigstens eine teilnehmerseitige Empfangseinrichtung vorgesehen. Die Empfangseinrichtung weist einen ersten Dekodierer zum Dekodieren des Haupt-Videodatenstroms, einen zweiten Dekodierer zum Dekodieren des Differenz-Videodatenstroms und eine Einrichtung zum Kombinieren des dekodierten Haupt-Videodatenstroms und des Differenz-Videodatenstroms auf.

Weiterhin kann die Empfangseinrichtung eine Steuereinrichtung aufweisen, die in Abhängigkeit von einem Parameter, insbesondere der aktuell verfügbaren Bandbreite des Zugangsanschlusses des Endteilnehmers, die Übertragung des Haupt-Videodatenstroms oder die Übertragung sowohl des Haupt-Videodatenstroms als auch des Differenz-Videodatenstroms steuert. Insbesondere ist die Steuereinrichtung derart ausgebildet, dass sie die Übertragung des Aufwerte-Videodatenstrom anfordert, wenn die aktuell verfügbare Bandbreite des Zugangsanschlusses einen vorbestimmten Wert überschreitet. Der Aufwerte-Videoadatenstrom kann in einer Speichereinrichtung zwischengespeichert sein.

Vorteilhafterweise sind die Kodierer gemäß einem MPEG-Standard ausgebildet.

Bei einer bevorzugten Ausführungsform erzeugt der erste Kodierer einen SDTV-Datenstrom als Haupt-Videodatenstrom.

Die Erfindung wird nachfolgend anhand eines Ausführungsbeispiels in Verbindung mit den beiliegenden Zeichnungen näher erläutert. Es zeigen:
- Fig. 1: in schematischer Weise ein Datenübertragungssystem, in welchem die Erfindung verwirklicht ist, und
- Fig. 2: den prinzipiellen Aufbau einer Sendeanstalt und einer Empfangseinrichtung, die in Fig. 1 dargestellt sind.

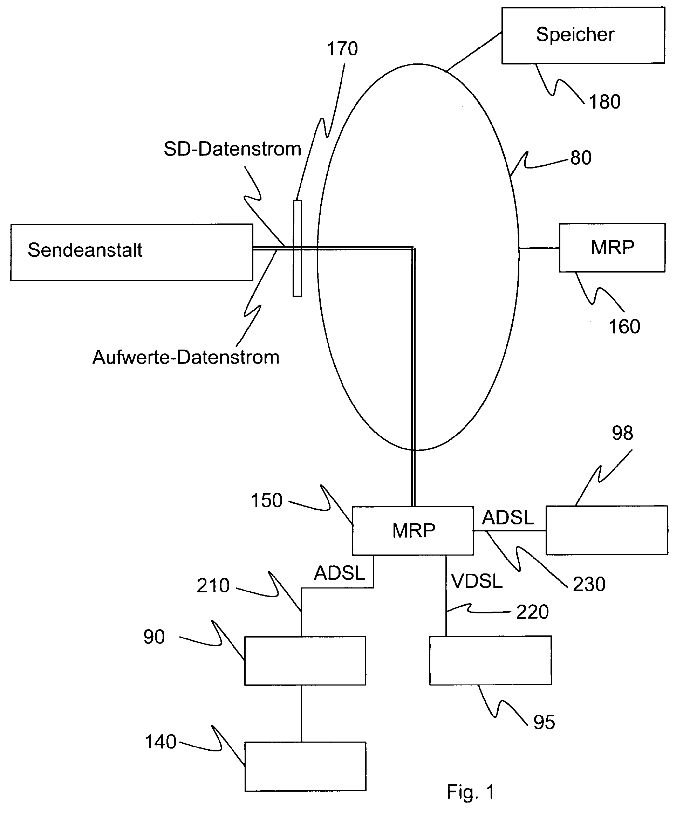

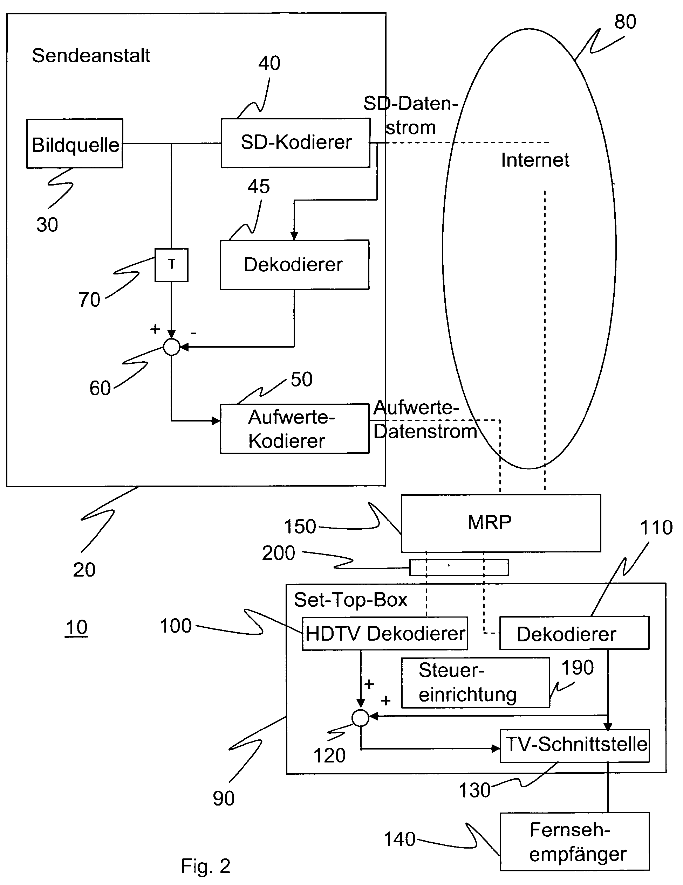

Fig. 1 zeigt in vereinfachter Form ein beispielhaftes Datenübertragungssystem 10, welches in einer Video-und/oder Audio-Umgebung einsetzbar ist. Lediglich der einfacheren Darstellung wegen ist nur eine Sendeanstalt 20 dargestellt, welche hochauflösende Fernsehprogramme, auch HDTV-Programme genannt, erzeugt. Die von der Sendeanstalt 20 erzeugten Programme werden als Video- und/oder Audio-Datenströme über einen Einspeiseserver 170 in ein IP-basiertes Verteilernetz 80, beispielsweise das Internet, eingespeist. Wie in Verbindung mit Fig. 2 noch näher erläutert wird, wird inn der Sendeanstalt 20 ein HDTV-Datenstrom, welcher ein hochauflösendes Fernsehprogramm darstellt, beispielsweise in einen schmalbandigen SDTV-Datenstrom und in einen breitbandigen Aufwerte-Datenstrom kodiert. Der Aufwerte-Datenstrom enthält beispielsweise die Unterschiede des SDTV-Datenstroms zum HDTV-Datenstrom. Mit anderen Worten enthält der Aufwerte-Datenstrom die Bildinformationen, die in Kombination mit den Bildinformationen des SDTV-Datenstroms das HDTV-Bild erzeugt. Der Aufwerte-Datenstrom kann in einem Speicher 180 zwischengespeichert werden. Der Speicher 180 kann innerhalb des IP-basierten Verteilernetzes 80 angeordnet oder eine externe Komponente sein. Die in das IP-basierte Verteilernetz 80 eingespeisten Datenströme werden über Auskopplungsknoten an die Endteilnehmer weitergeleitet. Der einfachen Darstellung wegen sind lediglich zwei Auskopplungsknoten 150 und 160 dargestellt. Bei den Auskopplungsknoten handelt es sich vornehmlich um sogenannte Multicast-Replikationspunkte, an die eine Gruppe von Teilnehmern angeschlossen sind. Wie in der Fig. 1 dargestellt, sind an dem Multicast-Replikationspunkt 150 drei Empfangseinrichtungen 90, 95 und 98 angeschlossen. Bei den Empfangseinrichtungen handelt es sich im vorliegenden Beispiel um sogenannte Set-Top-Boxen, an die ein herkömmlicher Fernsehempfänger angeschlossen werden kann. Beispielsweise ist an die Set-Top-Box 90 ein Fernsehempfänger 140 angeschlossen. Die Empfangseinrichtung, das heißt die Set-Top-Box 98 ist über eine ADSL-Leitung 230, welche eine Bandbreite von beispielsweise 2 Mbit/s aufweist, mit dem Multicast-Replikationspunkt 150 verbunden. Die Set-Top-Box 95 ist über eine VDSL-Leitung 220 mit einer Bandbreite von 50 Mbit/s angeschlossen. Die Set-Top-Box 90 ist über eine ADSL-Leitung 210, welche über eine Bandbreite von maximal 6 Mbit/s verfügt, an dem Multicast-Replikationspunkt 150 angeschlossen.

Da zur Übertragung eines HDTV-Programms eine Bandbreite von mindestens 5 Mbit/s benötigt wird, wird der SDTV-Datenstrom und der Aufwerte-Datenstrom nur vom Multicast-Replikationspunkt 150 an die Set-Top-Boxen 90 und 95 weitergeleitet. Hingegen leitet der Multicast-Replikationspunkt 150 lediglich den SDTV-Datenstrom zur Set-Top-Box 98 weiter. Wie nachfolgend noch näher anhand der Set-Top-Box 90 erläutert wird, kann die Set-Top-Box 90 aus dem empfangenen SD-Videodatenstrom und dem empfangenen Aufwerte-Datenstrom den ursprünglichen HDTV-Datenstrom erzeugen, so dass auf dem Fernsehempfänger 140 ein hochauflösendes Fernsehprogramm dargestellt werden kann. Nunmehr wird auf Fig. 2 Bezug genommen, die den detaillierten Aufbau der Sendeanstalt 20 und der Set-Top-Box 90 zeigt.

Eine allgemein mit 30 bezeichnete Bildquelle liefert HDTV-Datenströme, die ein zu übertragendes HDTV-Programm enthalten. Der breitbandige HDTV-Datenstrom wird dann einem Kodierer 40 zugeführt, der den breitbandigen HDTV-Datenstrom in einen schmalbandigeren Videodatenstrom, beispielsweise einen SDTV-Datenstrom kodiert. Der SDTV-Datenstrom wird zum einen über den Einspeiseknoten 170 in das Internet 80 eingespeist. Zum anderen wird der SDTV-Datenstrom in der Sendeanstalt 20 einem Dekodierer zugeführt, der den SDTV-Datenstrom in ein schmalbandiges Videosignal umsetzt. Der von der Bildquelle 30 gelieferte HDTV-Datenstrom wird über ein Verzögerungselement 70 zeitlich verzögert und einer Subtraktionsstufe 60 zugeführt. Das Verzögerungselement kompensiert die Verarbeitungszeit des Kodierers 40 und des Dekodierers 45. Gleichzeitig wird das Ausgangssignal des Dekodierers 45 der Subtraktionsstufe 60 zugeführt. Die Subtraktionsstufe 60 erzeugt aus dem HDTV-Datenstrom und dem SDTV-Datenstrom ein Differenzsignal, welches einem Kodierer 50, nachfolgend auch Aufwerte-Kodierer genannt, zugeführt wird. Der Aufwerte-Kodierer 50 kodiert das Differenzsignal in einen breitbandigen Aufwerte-Videodatenstrom, der ebenfalls über den Einspeiseknoten 170 in das Internet 80 eingespeist wird. Angemerkt sei an dieser Stelle, dass der SDTV-Datenstrom beispielsweise eine Bitrate von 250 kbit/s aufweisen kann, während der Aufwerte-Videodatenstrom eine Bitrate von 4,75 Mbit/s besitzen kann. Bei dem SD-Kodierer 40 kann es sich um einen MPEG-Kodierer handeln, der einen Videodatenstrom erzeugt, der auf dem Fernsehempfänger 140 vollständig, aber in minderer Bildqualität dargestellt werden kann. Der Aufwerte-Datenstrom enthält lediglich die Bildinformation, die zum Herstellen eines hochauflösenden Bildes notwendig ist. Demzufolge kann der Aufwerte-Datenstrom allein am Fernsehempfänger 140 nicht dargestellt werden. Die am Multicast-Replikationspunkt 150 über die ADSL-Leitung angeschlossene Set-Top-Box 90 weist einen Kodierer 100 auf, der den Aufwerte-Videodatenstrom dekodieren kann. Ein weiterer Dekodierer 110 ist vorgesehen, der zum Dekodieren des SDTV-Datenstroms ausgebildet ist. Der Ausgang der beiden Dekodierer 100 und 110 ist mit einer Kombinationseinrichtung 120 verbunden, welche den dekodierten SDTV-Datenstrom und den dekodierten Aufwerte-Videodatenstrom derart kombiniert, dass ein HDTV-Datenstrom erzeugt wird, der als hochauflösendes Bild am Fernsehempfänger 140 dargestellt werden kann. Hierzu wird der HDTV-Datenstrom über eine TV-Schnittstelle 130 der Set-Top-Box 90 zum Fernsehempfänger 140 übertragen. Die höchste Bildqualität wird demzufolge am Fernsehempfänger 140 dann erreicht, wenn sowohl der schmalbandige SDTV-Datenstrom als auch der Aufwerte-Videodatenstrom in der Set-Top-Box 90 kombiniert werden.

Die Kombinationsschaltung 120 ist derart ausgebildet, dass sie den Zeitpunkt ermitteln kann, zu dem der dekodierte SDTV-Datenstrom und der dekodierte Aufwerte-Videodatenstrom korrekt kombiniert werden können. Beispielsweise kann die Bildquelle 30 der Sendeanstalt Synchronisations-Informationen in den HDTV-Datenstrom eingebettet werden, die sowohl der Subtraktionsstufe 60 der Sendeanstalt als auch der Kombinationsschaltung 120 der Set-Top-Box 90 mitteilen, wann das Differenzsignal beziehungsweise das kombinierte Signal gebildet werden kann. Der Set-Top-Box 90 kann eine Einrichtung 200 zugeordnet sein, die die aktuelle Bandbreite der ADSL-Leitung 210 ermitteln kann. Weiterhin ist der Set-Top-Box 90 eine Steuereinrichtung 190 zugeordnet, die je nach verfügbarer Bandbreite der ADSL-Leitung 210 eine Übertragung des Aufwerte-Videodatenstroms, der beispielsweise im Speicher 180 zwischengespeichert ist, anfordern kann.

Bei einem beispielhaften Szenario hat der an der ADSL-Leitung 210 angeschlossene Teilnehmer breitbandige Dienste abonniert, deren Übertragung dazu führt, dass aktuell die verfügbare Bandbreite der ADSL-Leitung 210 unter 5 Mbit/s gefallen ist. Sobald die Bandbreite-Ermittlungseinrichtung 200 diese Information der Set-Top-Box 90 mitgeteilt hat, sorgt die Set-Top-Box 90 dafür, dass nur noch der SDTV-Datenstrom und nicht mehr der Aufwerte-Videodatenstrom übertragen wird. Steigt die Bandbreite der ADSL-Leitung 210 wieder über 5Mbit/s an, signalisiert die Bandbreite-Ermittlungseinrichtung 200 dieses Ergebnis der Set-Top-Box 90, die daraufhin über die Steuereinrichtung 190 wieder die Übertragung des Aufwerte-Videodatenstroms, der beispielsweise im Speicher 180 zwischengespeichert ist, anfordert. In diesem Augenblick kann wieder ein Bild in HDTV-Qualität auf dem Fernsehgerät 140 dargestellt werden. Somit passt die Set-Top-Box 90 automatisch die Bildqualität an die aktuell verfügbare Bandbreite der ADSL-Leitung 210 an.

Sind die Auskopplungspunkte, das heißt im vorliegenden Beispiel die Multicast-Replikationspunkte hierarchisch strukturiert, ist es denkbar, Aufwerte-Videodatenströme von selten gesehenen Sendern in höheren Multicast-Replikationspunkten abzubestellen. In diesem Fall werden nur die SDTV-Datenströme zu den niedrigsten Multicast-Replikationspunkten, das sind im vorliegenden Beispiel die Multicast-Replikationspunkte 150, 160 übertragen.

## Patentansprüche

1. Verfahren zur Bandbreite-optimierten Übertragung eines HDTV-Datenstroms über ein IP-basiertes Verteilernetz (80) zu wenigstens einem Endteilnehmer, der über einen Zugangsanschluss vorbestimmter maximaler Bandbreite mit dem IP-basierten Verteilernetz verbunden ist, mit folgenden Verfahrensschritten:
a) Bereitstellen, von einer Sendeanstalt (20), eines HDTV-Datenstroms, welcher ein HDTV-Programm darstellt;
b) Kodieren des HDTV-Datenstroms in einen Haupt-Videodatenstrom, welcher eine niedrigere Bandbreite als der HDTV-Datenstrom besitzt;
c) Kodieren des HDTV-Datenstroms in wenigstens einen Differenz-Videodatenstrom, der nicht allein darstellbar ist, wobei Schritt c) folgende Schritte umfasst:
Dekodieren des Haupt-Videodatenstroms; Verzögern des HDTV-Datenstrom um eine vorbestimmte Zeit; Bilden eines Differenzsignals aus dem verzögerten HDTV-Datenstrom und dem dekodierten Haupt-Videodatenstrom, und Kodieren des Differenzsignals in den Differenz-Videodatenstrom;
d) Einspeisen des Haupt- und Differenz-Videodatenstroms in das IP-basierte Verteilernetz (80);
e) Übertragen, in Abhängigkeit der verfügbaren Bandbreite des Zugangsanschlusses des wenigstens einen Endteilnehmers, des Haupt-Videodatenstroms oder des Haupt-Videodatenstroms und des wenigstens einen Differenz-Videodatenstroms zu dem wenigstens einen Endteilnehmer, wobei die aktuell verfügbare Bandbreite des Zugangsanschlusses des wenigstens einen Endteilnehmers auch während der Wiedergabe des HDTV-Programms ermittelt und in Abhängigkeit von der ermittelten Bandbreite die Übertragung des Differenz-Videodatenstroms gesteuert wird;
f) Dekodieren des Haupt-Videodatenstroms und Wiedergabe des HDTV-Programms in niedrigerer Bildqualität oder
g) Dekodieren des Haupt-Videodatenstroms und des wenigstens einen Differenz-Videodatenstroms und Wiedergabe des HDTV- Programms in aufgewerteter Bildqualität.

2. Verfahren nach Anspruch 1, **dadurch gekennzeichnet, dass**
der Differenz-Videodatenstrom zwischengespeichert und nur dann zum Endteilnehmer übertragen wird, wenn dessen Zugangsanschluss über eine ausreichend hohe Bandbreite zum Empfang des Haupt- und Differenz-Videodatenstroms verfügt.

3. Verfahren nach Anspruch 2, **dadurch gekennzeichnet, dass**
der Differenz-Videodatenstrom im IP-basierten Verteilernetz zwischengespeichert wird.

4. Verfahren nach einem der vorstehenden Ansprüche, **dadurch gekennzeichnet, dass**
Schritt g) den Schritt des Kombinierens des dekodierten Haupt- und Differenz-Videodatenstroms enthält.

5. Verfahren nach einem der vorstehenden Ansprüche, **dadurch gekennzeichnet, dass**
in Schritt c) eine HDTV-Delta-Kodierung durchgeführt wird.

6. Datenübertragungssystem (10) zur Bandbreite-optimierten Übertragung eines HDTV-Datenstroms mit einem IP-basierten Verteilernetz (80), wenigstens einer Sendeanstalt (20), die folgende Merkmale aufweist:
eine Einrichtung (30) zum Bereitstellen eines HDTV-Datenstroms, welcher ein HDTV-Programm darstellt,
einen ersten Kodierer (40) zum Kodieren des HDTV-Datenstroms in einen Haupt-Videodatenstrom niedrigerer Bandbreite,
einen Dekodierer (45) zum Dekodieren des Haupt-Videodatenstroms in einen darstellbaren Videodatenstrom,
ein Verzögerungselement (70) zum zeitlichen Verzögern des HDTV-Datenstroms,
eine Einrichtung (60) zum Erzeugen eines Differenzsignals aus dem zeitlich verzögerten HDTV-Datenstrom und dem dekodierten Haupt-Videodatenstrom,
einen zweiten Kodierer (50) zum Kodieren des Differenzsignals in einen Differenz-Videodatenstrom;
eine Einrichtung (170) zum Einspeisen des Haupt- und Differenz-Videodatenstroms in das IP-basierte Verteilernetz (80);
wenigstens eine teilnehmerseitige Empfangseinrichtung (90, 95, 98), die folgende Merkmale aufweist:
einen ersten Dekodierer (110) zum Dekodieren des Haupt-Videodatenstroms,
einen zweiten Dekodierer (100) zum Dekodieren des Differenz-Videodatenstroms, und
eine Einrichtung zum Kombinieren (120) des dekodierten Haupt-Videodatenstroms und des Differenz-Videodatenstroms; wobei
die Empfangseinrichtung eine Steuereinrichtung (190) aufweist, die in Abhängigkeit von einem Parameter die Übertragung des Differenz-Videodatenstroms steuert; und der Parameter die aktuell verfügbare Bandbreite einer breitbandigen Teilnehmeranschlussleitung (210, 220, 230) ist, und wobei eine Ermittlungseinrichtung (200) zum Ermitteln der aktuell verfügbaren Bandbreite der Teilnehmeranschlussleitung vorgesehen ist.

7. Datenübertragungssystem nach Anspruch 6, **dadurch gekennzeichnet, dass**
die Kodierer gemäß einem MPEG-Standard ausgebildet sind.

8. Datenübertragungssystem nach einem der Ansprüche 6 oder 7, **dadurch gekennzeichnet, dass** der Haupt-Videodatenstrom ein SDTV-Datenstrom ist.

9. Datenübertragungssystem nach einem der Ansprüche 6 bis 8, **gekennzeichnet durch**
eine Speichereinrichtung (180) zum Zwischenspeichern von Differenz-Videodatenströmen.

## Claims

1. A method for bandwidth-optimized transmission of a HDTV data stream via an IP-based distributor network (80) to at least one end subscriber which is connected to the IP-based distributor network via an access port of predetermined maximum bandwidth, comprising the method steps of:
a) providing, by a broadcasting service (20), an HDTV data stream representing an HDTV program;
b) encoding the HDTV data stream into a main video data stream which has a lower bandwidth than the HDTV data stream;
c) encoding the HDTV data stream into at least one differential video data stream that cannot be displayed alone; wherein step c) comprises the steps of:
decoding the main video data stream;
delaying the HDTV data stream by a predetermined time;
forming a differential signal from the delayed HDTV data stream and the decoded main video data stream; and
encoding the differential signal into the differential video data stream;
d) feeding the main and differential video data streams into the IP-based distributor network (80);
e) transmitting the main video data stream or the main video data stream and the at least one differential video data stream to the at least one end subscriber, based on the available bandwidth of the access port of the at least one end subscriber;
wherein the currently available bandwidth of the access port of the at least one end subscriber is determined even during playback of the HDTV program and the transmission of the differential video data stream is controlled based on the determined bandwidth;
f) decoding the main video data stream and playback of the HDTV program in lower image quality; or
g) decoding the main video data stream and the at least one differential video data stream and playback of the HDTV program in enhanced image quality.

2. The method according to claim 1, **characterized in that** the differential video data stream is buffered and is only transferred to the end subscriber when a sufficiently high bandwidth for receiving the main and differential video data streams is available at the access port of the end subscriber.

3. The method according to claim 2, **characterized in that** the differential video data stream is buffered in the IP-based distributor network.

4. The method according to any of the preceding claims, **characterized in that** step g) comprises the step of combining the decoded main and differential video data streams.

5. The method according to any of the preceding claims, **characterized in that** in step c) HDTV delta encoding is performed.

6. A data transmission system (10) for bandwidth-optimized transmission of a HDTV data stream, comprising:
an IP-based distributor network (80);
at least one broadcasting service (20) comprising the following features:
a device (30) for providing an HDTV data stream representing an HDTV program;
a first encoder (40) for encoding the HDTV data stream into a main video data stream of lower bandwidth;
a decoder (45) for decoding the main video data stream into a displayable video data stream;
a delay element (70) for time-delaying the HDTV data stream;
means (60) for generating a differential signal from the time-delayed HDTV data stream and the decoded main video data stream;
a second encoder (50) for encoding the differential signal into a differential video data stream;
means (170) for feeding the main and differential video data streams into the IP-based distributor network (80);
at least one subscriber-end receiving device (90, 95, 98), comprising the following features:
a first decoder (110) for decoding the main video data stream;
a second decoder (100) for decoding the differential video data stream; and
means for combining (120) the decoded main video data stream and the differential video data stream;
wherein said receiving device comprises a control device (190) controlling the transfer of the differential video data stream based on a parameter; and
wherein the parameter is the currently available bandwidth of a broadband subscriber line (210, 220, 230), and wherein detecting means (200) are provided for determining the currently available bandwidth of the subscriber line.

7. The data transmission system according to claim 6, **characterized in that** the encoders are configured according to an MPEG standard.

8. The data transmission system according to any of claims 6 or 7, **characterized in that** the main video data stream is an SDTV data stream.

9. The data transmission system according to any of claims 6 to 8, **characterized by** a memory means (180) for buffering differential video data streams.

## Revendications

1. Procédé de transmission à bande passante optimisée d'un flux de données TVHD par un réseau de distribution basé IP (80) vers au moins un abonné terminal, lequel est raccordé au réseau de distribution basé IP par une connexion d'accès à largeur de bande maximale définie, comprenant les étapes suivantes :
a) délivrance, par une station de radiodiffusion (20), d'un flux de données TVHD constituant un programme de TVHD ;
b) codage du flux de données TVHD dans un flux de données vidéo principal présentant une largeur de bande inférieure à celle du flux de données TVHD ;
c) codage du flux de données TVHD dans au moins un flux de données vidéo différentiel qui n'est pas représentable seul, l'étape c) comprenant les étapes suivantes :
décodage du flux de données vidéo principal ;
temporisation du flux de données TVHD par une durée prédéterminée ;
formation d'un signal différentiel à partir du flux de données TVHD temporisé et du flux de données vidéo principal décodé, et
codage du signal différentiel dans le flux de données vidéo différentiel ;
d) intégration du flux de données vidéo principal et du flux de données vidéo différentiel dans le réseau de distribution basé IP (80) ;
e) transmission, en fonction de la largeur de bande disponible de la connexion d'accès dudit au moins un abonné terminal, du flux de données vidéo principal ou du flux de données vidéo principal et dudit au moins un flux de données vidéo différentiel vers ledit au moins un abonné terminal, la largeur de bande effectivement disponible de la connexion d'accès dudit au moins un abonné terminal étant également déterminée pendant la diffusion du programme de TVHD et la transmission du flux de données vidéo différentiel étant commandée en fonction de la largeur de bande déterminée ;
f) décodage du flux de données vidéo principal et diffusion du programme de TVHD avec une qualité d'image réduite ou
g) décodage du flux de données vidéo principal et dudit au moins un flux de données vidéo différentiel, et diffusion du programme de TVHD dans une qualité d'image valorisée.

2. Procédé selon la revendication 1, **caractérisé en ce que** le flux de données vidéo différentiel est mémorisé temporairement et n'est transmis à l'abonné terminal que quand la connexion d'accès de celui-ci dispose d'une largeur de bande suffisamment élevée pour la réception du flux de données vidéo principal et du flux de données vidéo différentiel.

3. Procédé selon la revendication 2, **caractérisé en ce que** le flux de données vidéo différentiel est mémorisé temporairement dans le réseau de distribution basé IP.

4. Procédé selon l'une des revendications précédentes, **caractérisé en ce que** l'étape g) comprend l'étape de combinaison du flux de données vidéo principal décodé et du flux de données vidéo différentiel.

5. Procédé selon l'une des revendications précédentes, **caractérisé en ce qu'**un codage delta TVHD est exécuté en étape c).

6. Système de transmission de données (10) pour la transmission à bande passante optimisée d'un flux de données TVHD avec un réseau de distribution basé IP (80), au moins une station de radiodiffusion (20) comprenant les caractéristiques suivantes :
un dispositif (30) pour la délivrance d'un flux de données TVHD constituant un programme de TVHD,
un premier codeur (40) pour le codage du flux de données TDHV dans un flux de données vidéo principal de largeur de bande réduite,
un décodeur (45) pour le décodage du flux de données vidéo principal dans un flux de données vidéo représentable,
un élément temporisateur (70) pour la temporisation du flux de données TVHD,
un dispositif (60) pour la génération d'un signal différentiel à partir du flux de données TVHD temporisé et du flux de données vidéo principal décodé,
un deuxième codeur (50) pour la codage du signal différentiel dans un flux de données vidéo différentiel ;
un dispositif (170) pour l'intégration du flux de données vidéo principal et du flux de données vidéo différentiel dans le réseau de distribution basé IP (80) ;
au moins un dispositif de réception (90, 95, 98) côté abonné présentant les caractéristiques suivantes :
un premier décodeur (110) pour le décodage du flux de données vidéo principal,
un deuxième décodeur (100) pour le décodage du flux de données vidéo différentiel, et
un dispositif pour la combinaison (120) du flux de données vidéo principal décodé et du flux de données vidéo différentiel ;
le dispositif de réception comportant un dispositif de commande (190) commandant la transmission du flux de données vidéo différentiel en fonction d'un paramètre ; et le paramètre étant la largeur de bande effectivement disponible d'une ligne de connexion d'abonné à large bande (210, 220, 230), et un dispositif de détermination (200) étant prévu pour la détermination de la largeur de bande effectivement disponible de la ligne de connexion d'abonné.

7. Système de transmission de données selon la revendication 6, **caractérisé en ce que** les codeurs sont réalisés conformément à une norme MPEG.

8. Système dé transmission de données selon la revendication 6 ou 7, **caractérisé en ce que** le flux de données vidéo principal est un flux de données TVSD.

9. Système de transmission de données selon l'une des revendications 6 à 8, **caractérisé par** un dispositif de mémorisation (180) pour la mémorisation temporaire de flux de données vidéo différentiels.
